# EUROPÄISCHE PATENTSCHRIFT

(11) **EP 1 601 173 B1**
(45) Veröffentlichungstag und Bekanntmachung des Hinweises auf die Patenterteilung: **19.03.2008**
(21) Anmeldenummer: 05405292.3
(22) Anmeldetag: 13.04.2005
(51) Int. Cl.: H04M 11/02, H04B 3/54

(54) **Türsprech-Anlage mit installationsarmen Wohnungs-Sprechstellen**
Entrance intercom with easy to install answering devices
Intercom pour l'entrée avec des appareils de réponse à installer facilement

(30) Priorität: 24.05.2004 CH 8872004
(43) Veröffentlichungstag der Anmeldung: 30.11.2005
(73) Patentinhaber: Fry, Peter, 6002 Luzern (CH)
(72) Erfinder: Fry, Peter, 6002 Luzern (CH)
(74) Vertreter: Rutz & Partner

(56) Entgegenhaltungen:
- WO-A-03/049379
- DE-A- 4 042 088
- DE-B- 2 165 904
- US-A- 5 127 045

## Beschreibung

Die Erfindung betrifft ein Verfahren wie die Audio-, Video- und Steuersignale einer Türsprechanlage auf einem Kabelnetzwerk eines Gebäudes von der Türstation in die Wohnungsstationen (und umgekehrt) übermittelt werden können, wobei die Wohnungsstationen nicht mehr fest an ein Kabelnetz angeschlossen sind, sondern an jeder vorhandenen Steckdose des Kabelnetzwerkes eines Gebäudes betrieben werden können.

### Problembeschreibung

Es sind heute Türsprechanlagen bekannt, welche die Sprach- und/oder Video- und/oder Steuersignale auf dem bestehenden Schwachstromnetz (z.Bsp. bestehender SonnerieVerkabelung) eines Gebäudes übermitteln.

Diese Systeme scheitern, wenn keine bestehende Sonnerieverkabelung (z. Bsp. von einer vorhandenen Klingelanlage) vorhanden ist.

Falls ein bestehendes Schwachstromnetz zur Verfügung steht, müssen die Wohnungssprechstellen fest an dieses angeschlossen werden, was den mindestens einmaligen Zutritt einer Fremdperson in die Wohnungen bedingt.

Durch die feste Verbindung sind die Benutzer der Türsprechanlage wohnungsseitig stark eingeschränkt, da sie die Anlage nur an einem vorbestimmten Punkt in der Wohnung benutzen können.

Eine Türsprechanlage ist beispielsweise aus der WO 03/049379 bekannt. Die WO 03/049379 betrifft ein Internetbasiertes Heim-Automatisierungssystem, welches einen Internet-basierten Heim-Automatisierungsserver umfasst, der ein PLC (Power Line Communication) Interface aufweist, über das Haushaltgeräte steuerbar sind. Eine Fronttürsprechstelle mit konventionellen Funktionen ist hingegen über gesonderte Leitungen mit einem Anwender Interface Modul des Automatisierungssystems verbunden. Zusätzlich zum Problem der Notwendigkeit eines separaten Kabelnetzwerks resultiert bei diesem System daher das Problem, dass die Wohnungssprechstelle in das Automatisierungssystem fest integriert ist, dessen Komponenten in der Wohnung fest installiert werden. Die Möglichkeit der wahlweisen Anordnung der Wohnungssprechstelle ist bei diesem System daher nicht gegeben. Der Anwender muss sich stets zum fest installierten Anwender Interface Modul des Automatisierungssystems bemühen, wenn er mit der Fronttürsprechstelle kommunizieren will.

### Problemlösung / Zusammenfassung

Es ist die Aufgabe der Erfindung, eine wohnungsseitig installationsfreie Türsprechanlage bereitzustellen, in dem Sinne, als für die Verbindung der Wohnungssprechstelle(n) mit der Türsprechstelle kein Zutritt durch eine Fremdperson notwendig ist.

Die Verbindung der Wohnungssprechstelle mit der Türsprechanlage setzt keine Installationskenntnisse voraus. Zudem ist für den Betrieb der Türsprechanlage gemäss untenstehendem Patentanspruch kein bestehendes Schwachstromnetz vorausgesetzt.

Des weiteren kann die Wohnungssprechstelle an jeder beliebigen Steckdose der Wohnung betrieben werden.

Diese Aufgabe wird dadurch gelöst, dass die an der Türsprechstelle (3) gesendeten Sprach- und/oder Videosignale und/oder Steuersignale mittels Powerline-Technik an die eindeutig adressierte Wohnungssprechstelle (6) übermittelt werden und umgekehrt. Die Zentraleinheit der Türsprechstelle ist dabei mit dem Kabelnetzwerk verbunden.

Die Wohnungssprechstelle kann an einer beliebigen Steckdose (5) der Wohnung mit dem Kabelnetz (1) - und damit mit der Türsprechanlage - verbunden sein.

Die dadurch etablierte Verbindung wird für die bekannten Funktionen einer Türsprechanlage (Rufen, Sprechen, Sehen, Öffnen) genutzt.

Da die Verbindung der Wohnungssprechstelle mit der Türsprechanlage an jeder beliebigen Steckdose der Wohnung vorgenommen werden kann und keine speziellen Kenntnisse des Benutzers vorausgesetzt sind, kann jene jederzeit und an beliebigen Steckdosen in der Wohnung durch Einstecken hergestellt werden.

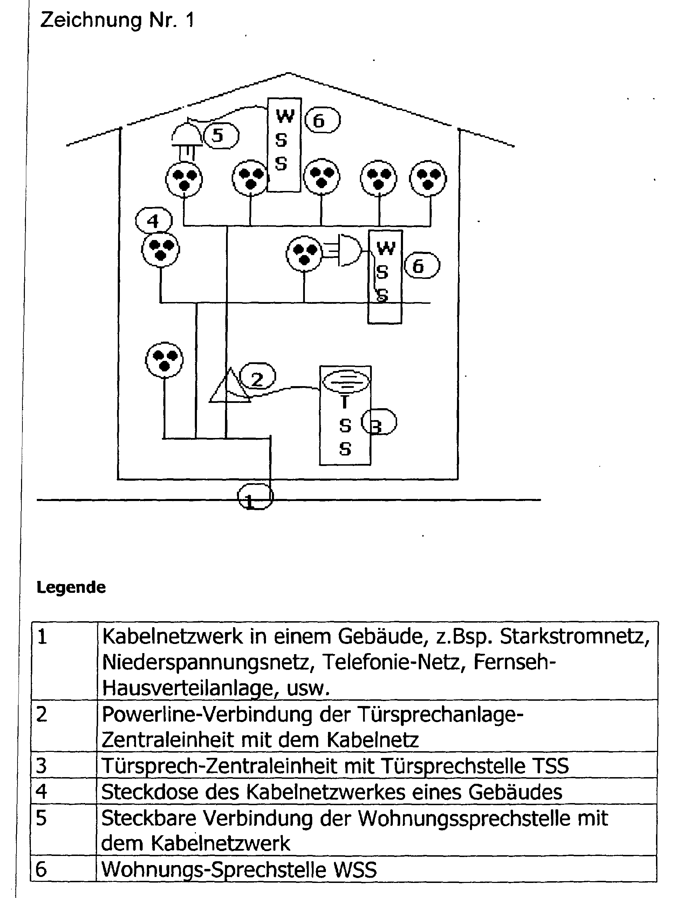

## Patentansprüche

1. Türsprechanlage für ein wenigstens eine Gebäudeeinheit, wie Wohnungen, Büros, Gewerberäume oder weitere Lokalitäten, umfassendes Gebäude, in dem ein der Energieversorgung dienendes Kabelnetzwerk (1) installiert ist, das mit einer Mehrzahl von Steckdosen (4) verbunden ist, mit einer Türsprechstelle (3) und wenigstens einer Wohnungssprechstelle (6), wobei die Türsprechstelle (3) und die wenigstens eine Wohnungssprechstelle (6) mit Powerline-Technik ausgerüstet sind, mittels der Sprach- und/oder Video- und/oder Steuersignale über das Kabelnetzwerk (1) zwischen der Türsprechstelle (3) und der wenigstens einen Wohnungssprechstelle (6) übertragbar sind wobei die Türsprechstelle (3) über eine Verbindungsstelle (2) mit dem Kabelnetzwerk (1) verbunden ist, **dadurch gekennzeichnet dass** die wenigstens eine Wohnungssprechstelle (6) mittels eines Steckverbinders (5) lösbar mit einer der Steckdosen (4) des Kabelnetzwerks (1) verbunden ist.

2. Türsprechanlage nach Anspruch 1, **dadurch gekennzeichnet, dass** in jeder Wohnung mehrere Steckdosen (4) vorgesehen sind, an die die Wohnungssprechstellen (6) mittels des Steckverbinders (5) anschliessbar sind.

3. Türsprechanlage nach Anspruch 1 oder 2, **dadurch gekennzeichnet, dass** die wenigstens eine Wohnungssprechstelle (6) eindeutig adressierbar ist, so dass die Signale von der Türsprechstelle (3) zur adressierten Wohnungssprechstelle (6) übermittelbar sind.

4. Türsprechanlage nach Anspruch 1 oder 2, **dadurch gekennzeichnet, dass** die Verbindung zwischen der zwischen der Türsprechstelle (3) und der wenigstens einen Wohnungssprechstelle (6) durch Verbindung des Steckverbinders (5) mit einer beliebigen der Steckdosen (4) etablierbar ist.

5. Verfahren für den Betrieb einer Türsprechanlage in einem wenigstens eine Gebäudeeinheit, wie Wohnungen, Büros, Gewerberäume oder weitere Lokalitäten, umfassenden Gebäude, in dem ein der Energieversorgung dienendes Kabelnetzwerk (1) installiert ist, das mit einer Mehrzahl von Steckdosen (4) verbunden ist, mit einer Türsprechstelle (3) und wenigstens einer Wohnungssprechstelle (6), wobei die Türsprechstelle (3) und die wenigstens eine Wohnungssprechstelle (6) mittels Verfahren der Powerline-Technik Sprach- und/oder Video- und/oder Steuersignale über das Kabelnetzwerk (1) zwischen der Türsprechstelle (3) und der wenigstens einen Wohnungssprechstelle (6) übertragen wobei die Türsprechstelle (3) über eine Verbindungsstelle (2) mit dem Kabelnetzwerk (1) verbunden ist, **dadurch gekennzeichnet dass** die wenigstens eine Wohnungssprechstelle (6) mittels eines Steckverbinders (5) lösbar mit einer der Steckdosen (4) des Kabelnetzwerks (1) verbunden wird.

6. Verfahren nach Anspruch 5, **dadurch gekennzeichnet, dass** die wenigstens eine Wohnungssprechstelle (6) mit einer Adresse versehen wird und die Signale von der Türsprechstelle (3) zur entsprechend adressierten Wohnungssprechstelle (6) übermittelt werden.

## Claims

1. Door intercommunication system for a building that comprises at least one building unit, such as apartments, offices, commercial premises or others, in which building a cable network (1) is installed that serves for supplying energy and that is connected to a plurality of sockets (4), with a door point communication unit (3) and at least one apartment communication unit (6), that the door point communication unit (3) and the at least one apartment communication unit (6) are equipped with powerline-technology, with which speech- and/or video- and/or control signals are transferable over the cable network (1) between the door point communication unit (3) and the at least one apartment communication unit (6) and that the door point communication unit (3) is connected to the cable network (1) via a connection unit (2), **characterised in that** that the at least one apartment communication unit (6) is releasably connected by means of a plug (5) with one of the sockets (4).

2. Door intercommunication system according to claim 1, **characterised in that** in each apartment a plurality of sockets (4) are provided, to which the apartment communication units (6) are connectable by means of the plug (5).

3. Door intercommunication system according to claim 1 or 2, **characterised in that** the at least one apartment communication unit (6) is unambiguously addressable, so that the signals from the door point communication unit (3) are transferable to the addressed apartment communication unit (6).

4. Door intercommunication system according to claim 1 or 2, **characterised in that** the connection between the door point communication unit (3) and the at least one apartment communication unit (6) can be established by connecting the plug (5) with any of the sockets (4).

5. Method for operating a door intercommunication system in a building that comprises at least one building unit, such as apartments, offices, commercial premises or others, in which building a cable network (1) is installed that serves for supplying energy and that is connected to a plurality of sockets (4), with a door point communication unit (3) and at least one apartment communication unit (6), that the door point communication unit (3) and the at least one apartment communication unit (6) by means of procedures of the powerline-technology transfer speech- and/or video- and/or control signals over the cable network (1) between the door point communication unit (3) and the at least one apartment communication unit (6) and that the door point communication unit (3) is connected to the cable network (1) via a connection unit (2), **characterised in that** that the at least one apartment communication unit (6) is releasably connected by means of a plug (5) with one of the sockets (4).

6. Method according to claim 5, **characterised in that** the at least one apartment communication unit (6) is provided with an address and that the signals from the door point communication unit (3) are transferred to the correspondingly addressed apartment communication unit (6).

## Revendications

1. Interphone de porte pour au moins un bâtiment comprenant des unités, telles que des appartements, des bureaux, des locaux professionnels ou autres, dans lequel un réseau câblé (1) servant à l'alimentation électrique est installé et est relié à un grand nombre de prises électriques (4), avec au moins un poste d'interphone extérieur (3) et au moins un poste d'interphone intérieur (6), le poste d'interphone de porte extérieur (3) et au moins le poste d'interphone de porte intérieur (6) étant équipés de la technique Powerline, au moyen de laquelle des signaux de commande, vidéo et/ou audio peuvent être transmis par le réseau câblé (1) entre le poste d'interphone de porte extérieur (3) et au moins le poste d'interphone de porte intérieur (6), le poste d'interphone de porte extérieur (3) étant relié par un point de connexion (2) au réseau câblé (1) **caractérisé en ce que** le poste d'interphone de porte intérieur (6) est relié par un connecteur enfichable (5) de manière amovible à l'une des prises de courant (4) du réseau câblés (1).

2. Interphone de porte selon la revendication 1, **caractérisé en ce que** dans chaque appartement, il est prévu plusieurs prises de courant (4) auxquelles peuvent être reliés des postes d'interphone intérieurs (6) au moyen du connecteur à fiche (5).

3. Interphone de porte selon la revendication 1 ou 2, **caractérisé en ce que** le poste d'interphone de porte intérieur (6) peut être adressable de manière univoque de sorte que les signaux sont transmis par le poste d'interphone de porte extérieur (3) au poste d'interphone de porte intérieur adressé (6).

4. Interphone de porte selon la revendication 1 ou 2, **caractérisé en ce que** la connexion entre le poste d'interphone de porte extérieur (3) et au moins un poste d'interphone intérieur (6) peut être établie par connexion du connecteur enfichable (5) à n'importe quelle prise de courant (4).

5. Procédé pour le fonctionnement d'un interphone de porte dans au moins un bâtiment comprenant des unités, telles que des appartements, des bureaux, des locaux professionnels ou autres, dans lequel un réseau câblé (1) servant à l'alimentation électrique est installé et est relié à un grand nombre de prises électriques (4), avec au moins un poste d'interphone extérieur (3) et au moins un poste d'interphone intérieur (6), le poste d'interphone de porte extérieur (3) et au moins le poste d'interphone de porte intérieur (6) étant équipés de la technique Powerline (courants porteurs en ligne), au moyen de laquelle des signaux de commande, vidéo et/ou audio sont transmis par le réseau câblé (1) entre le poste d'interphone de porte extérieur (3) et au moins le poste d'interphone de porte intérieur (6), le poste d'interphone de porte extérieur (3) étant relié par un point de connexion (2) au réseau câblé (1) **caractérisée en ce que** l'interphone de porte intérieur (6) est relié par un connecteur enfichable (5) de manière amovible à l'une des prises de courant (4) du réseau câblé (1).

6. Procédé selon la revendication 5, **caractérisé en ce qu'**au moins un poste d'interphone de porte intérieur (6) est doté d'une adresse et les signaux sont transmis par le poste d'interphone de porte extérieur (3) au poste d'interphone de porte intérieur adressé correspondant (6).
